# EUROPÄISCHE PATENTSCHRIFT

(11) **EP 2 284 217 B1**
(45) Veröffentlichungstag und Bekanntmachung des Hinweises auf die Patenterteilung: **07.12.2011**
(21) Anmeldenummer: 09167499.4
(22) Anmeldetag: 07.08.2009
(51) Int. Cl.: C08K 5/00, C08K 5/098, C08K 3/16, C08K 5/46, C08K 5/372

(54) **Vulkanisationsbeschleunigende Mischung**
Vulcanisation accelerating mixture
Mélange accélérant la vulcanisation

(43) Veröffentlichungstag der Anmeldung: 16.02.2011
(73) Patentinhaber: Rhein Chemie Rheinau GmbH, 68219 Mannheim (DE)
(72) Erfinder: Säwe, Martin, 69488 Birkenau (DE); Hoff, Dietmar, 67122 Altrip (DE); Grieshaber, Willi, 68519 Viernheim (DE); Kleinknecht, Harald, 55232 Alzey (DE)
(74) Vertreter: Siegers, Britta

(56) Entgegenhaltungen:
- EP-A1- 0 625 543
- DE-A1- 2 210 129
- US-A- 3 985 832
- US-A- 4 022 848
- US-A- 4 683 270
- EHOLZER, U.; KEMPERMANN, T.: "Ein neuer Polychloroprenbeschleuniger als Ersatzpunkt für Ethylenthioharnstoff" KAUTSCHUK GUMMI KUNSTSTOFF, Bd. 33, Nr. 9, 1980, Seiten 696-699, XP1536711 DE ISSN: 0022-9520
- WARRACH, W.; TSOU, DON: "A curative for chlorobutyl rubber 3-methylthiazolidinethione-2" ELASTOMERICS, Bd. 116, Nr. 11, 1984, Seiten 26-29, XP009127721 ISSN: 0146-0706
- SAEWE, M.; KLEINKNECHT, H.; ISSEL, H.-M.; ROSCA, C.: "Cure systems for high performance rubber applications" RUBBERCHEM 2006, INTERNATIONAL CONFERENCE, 5TH, MUNICH, GERMANY, DEC. 5-6, 2006 (2006), 9/1-9/14, 5. Dezember 2005 (2005-12-05), - 6. Dezember 2006 (2006-12-06) XP9127720 Rapra Technology Ltd., Shrewsbury, UK ISBN: 978-1-84735-005-3
- DATABASE WPI Week 199716 Thomson Scientific, London, GB; AN 1997-177640 XP002562370 -& RU 2 065 459 C1 (GAVRILENKO G YA) 20. August 1996 (1996-08-20)
- KHRISTOV, D.; BONCHEV, TS.: "Untersuchung der Beschleunigung der Harz-Vulkanisation von Butylkautschuk mit Hilfe des Mössbauer effektes" KAUTSCHUK GUMMI KUNSTSTOFFE, Bd. 29, Nr. 11, 1976, Seiten 673-675, XP009127767 ISSN: 0022-9520

## Beschreibung

Die vorliegende Erfindung betrifft eine Mischung, welche als Vulkanisationsbeschleuniger verwendet werden kann, ein Verfahren zu deren Herstellung und deren Verwendung, Vulkanisate, welche diese Mischungen oder entsprechende Einzelbestandteile der Mischung enthalten, sowie Vulkanisate, welche unter Verwendung dieser Mischung hergestellt werden.

Unter der Vulkanisation versteht man ein chemisch/technisches Verfahren, bei dem Kautschuk unter Einfluss von Zeit, Temperatur und Druck widerstandsfähig gemacht wird. Dazu wird beispielsweise eine Kautschukmischung, bestehend aus Rohkautschuk, Schwefel oder Schwefel spendenden Stoffen, beispielsweise Tetrabenzylthiuramdisulfid, Katalysatoren (zur Erhöhung der Reaktionsgeschwindigkeit) und Füllstoffen gemischt und erhitzt. Dabei werden die langkettigen Kautschukmoleküle durch Schwefelbrücken vernetzt. Hierdurch gehen die plastischen Eigenschaften des Kautschuks bzw. der Kautschukmischung verloren, der Stoff wird mittels des Verfahrens der Vulkanisation vom plastischen in einen elastischen Zustand überführt.

Bei der Vulkanisation von Kautschuk mit Schwefel werden zur Beschleunigung sogenannte Vulkanisationsbeschleuniger, welche im Allgemeinen organischer Art sind, zugesetzt. Hierbei handelt es sich beispielsweise um Xanthogenate, Dithiocarbamate, Mercaptobenzothiazole und andere Verbindungen, wie Thiazole, Guanidine, Thioharnstoff-Derivate oder Amin-Derivate.

Häufig verwendete Vulkanisationsbeschleuniger sind auch Tetramethylthiuramdisulfid sowie Ethylenthioharnstoff. Aus heutiger Sicht ist insbesondere Ethylenthioharnstoff als Vulkanisationsbeschleuniger kritisch. So existiert für Ethylenthioharnstoff wegen seiner Giftigkeit und des Verdachts auf krebserzeugende Wirkung ein Grenzwert von 0,05 ppm (BGB1 Rückstands-Höchstmengenverordnung vom 13. Januar 2003). Ethylenthioharnstoff ist darüber hinaus reproduktionstoxisch.

Dieses bedeutet insbesondere unter den Anforderungen der EG-Verordnung REACH (Registration, Evaluation, Authorization and Restriction of Chemicals), dass diese Chemikalie in naher Zukunft vollständig registriert werden muss. Zudem muss Ethylthioharnstoff unter REACH mit hoher Wahrscheinlichkeit ein Autorisierungsverfahren durchlaufen. Hierdurch sind hohe zusätzliche Kosten mit einem derzeit unsicheren Ausgang bezüglich der Zulassung gegeben. Es besteht daher Bedarf, diesen Vulkanisationsbeschleuniger durch alternative Beschleunigersysteme zu substituieren.

Beschleunigersysteme für die Vulkanisation von Chlorbutadien-Kautschuk (CR), enthaltend Ethylenthioharnstoff und ein Thiuramdisulfidderivat wie Tetramethylthiuramdisulfid (TMTD), weisen jedoch gleichzeitig den technischen Vorteil auf, dass sie bei dem Vulkanisationsfortschritt zu einem ausgeprägten Viskositätsminimum, gefolgt von einem steilen Anstieg der Viskosität aufgrund einsetzender Vernetzung führen. Dieses Viskositätsminimum zu Beginn der einsetzenden Vulkanisation ist entscheidend für eine gute Verarbeitbarkeit der zu vulkanisierenden Mischung, beispielsweise im Extruder oder auf Walzwerken, sowie den sich anschließenden Verarbeitungsschritten, beispielsweise dem Spritzgießen. Die bei diesen Systemen ausgeprägt auftretende anschließende Viskositätssteigerung weist darüber hinaus auf eine schnelle Vernetzung der Systeme hin, was wiederum wichtig für kurze Zykluszeiten bei der Herstellung von Massenprodukten ist.

Es besteht daher der Wunsch Ethylenthioharnstoff in Vulkanisationsbeschleunigersystemen aufgrund seiner Toxizität durch alternative Systeme zu ersetzen. Demnach sollten diese neuen Vulkanisationschemikalien ebenfalls zu einem ausgeprägten Viskositätsminimum zu Beginn der Vulkanisation und einer ausgeprägten Viskositätssteigerung im Verlauf der Vulkanisation führen.

Aufgabe der vorliegenden Erfindung ist daher die Bereitstellung einer Ethylenthioharnstoff-freien Mischung. Ethylenthioharnstoff sollte dabei durch weniger toxisch wirkende Verbindungen ersetzt werden, wobei gleichzeitig die Verarbeitungsbedingungen bei der Vulkanisation konstant bleiben bzw. sogar noch verbessert werden sollten.

Erfindungsgemäß wird zur Lösung dieser Aufgabe nunmehr ein Beschleunigersystem vorgeschlagen, welches
(1)als einen ersten Bestandteil 3-Methylthiazolidin-2-thion,
(2) einen zweiten Bestandteil, ausgewählt aus der Gruppe, bestehend aus einem Thiuramdisulfid-Derivat, einem Thiurampolysulfid-Derivat und/oder Mercaptobenzothiazoldisulfid, und
(3) als dritten Bestandteil mindestens eine Lewis-Säure ausgewählt aus der Gruppe bestehend aus Zinn(II)-chlorid, Zinn(II)-chlorid- Dihydrat, Zinndioctanoat, Zinnoxalat, Dibutylzinncarboxylat, Monobutyl- zinntris(2-ethylhexanoat), Dibutylzinndiisooctanoat, Dibutylzinndiacetat, Dibutylzinnoxid, Aluminium(III)-Chlorid, Titantetrachlorid, Antimonpentachlorid, Zinkchlorid und/oder Zinkchlorid-Dihydrat die vorzugsweise polymergebunden ist,
umfasst.

Erfindungsgemäß wurde herausgefunden, dass diese Mischung als Vulkanisationsbeschleuniger zu einem ähnlich guten Vulkanisationsverhalten wie Systeme mit Ethylenthioharnstoff führt, wobei die einzelnen verwendeten Bestandteile der erfindungsgemäßen Mischung unter toxikologischen Gesichtspunkten bevorzugt sind.

Die vorliegende Erfindung betrifft somit eine Mischung, umfassend (1) 3-Methylthiazolidin-2-thion, (2) Thiuramdisulfid- oder Thiurampolysulfid-Derivat und/oder Mercaptobenzothiazoldisulfid und (3) mindestens eine Lewis-Säure.

Die erfindungsgemäße Mischung wird den zu vulkanisierenden Elastomeren vor der Vulkanisation zugegeben.

Im Rahmen der vorliegenden Erfindung werden unter dem Begriff Thiurampolysulfid-Derivat vorzugsweise Verbindungen der folgenden Formel (I)verstanden 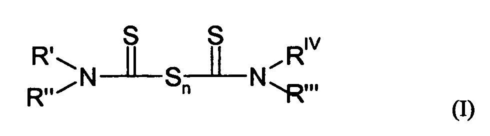 wobei R^{I}, R^{II}, R^{III} oder R^{IV}, jeweils gleich oder verschieden, einer arylischen, aliphatischen oder cyclischen Alkylgruppe mit bis zu 8 Kohlenstoffatome entspricht und n=2-6 ist. Für n=2 steht diese Formel für die Thiuramdisulfid-Derivate, wobei R^{I}, R^{II}, R^{III} oder R^{IV} die vorgenannte Bedeutung haben.

Insbesondere sind folgende Verbindungen zu nennen, die vorzugsweise eingesetzt werden. Tetramethylthiuramdisulfid (TMTD), Dipentamethylenthiuramdisulfid (DPTD), Bis(pentamethylen)thiuramtetrasulfid (DPTT), Tetraethylthiuramdisulfid (TETD), Bis- (dibutylthiocarbomyl)disulfid (TBTD), N,N,N',N'-tetraisobutylthiuram disulfid (TiBTD), Tetrabenzylthiuramdisulfid (TBzTD) und Dimethyldiphenylthiuramdisulfid (MPTD). Da im Falle von Tetrabenzylthiuramdisulfid im Gegensatz zu anderen Thiuramdisulfid-Derivaten keinerlei kanzerogene Nitrosamine während der Vulkanisation entstehen können, ist diese Substanz besonders bevorzugt. Dies ist auch in der Technischen Regel für Gefahrstoffe TRGS 552 zu N-Nitrosaminen beschrieben.

Die im Rahmen der vorliegenden Erfindung zu verwendende Lewis-Säure (3) kann eine beliebige Lewis-Säure sein, welche die Vulkanisation von entsprechenden Elastomeren beschleunigt. Insbesondere ist die erfindungsgemäß zu verwendende Lewis-Säure ausgewählt aus der Gruppe, bestehend aus Zinn(II)-chlorid, Zinn(II)-chlorid-Dihydrat, Zinndioctanoat, Zinnoxalat, Dibutylzinncarboxylat, Monobutylzinntris(2-ethylhexanoat), Dibutylzinndiisooctanoat, Dibutylzinndiacetat, Dibutylzinnoxid, Aluminium(III)-Chlorid, Titantetrachlorid, Antimonpentachlorid, Zinkchlorid und/oder Zinkchlorid-Dihydrat.
Gegebenenfalls können auch Mischungen der zuvor erwähnten Lewis-Säuren verwendet werden.

Von den vorstehend genannten Lewis-Säuren ist Zinn(II)-chlorid-Dihydrat, insbesondere bevorzugt.

Die Bestandteile (1), (2) und (3) werden dabei vorzugsweise in folgenden Mengenverhältnissen eingesetzt bezogen auf die Reinsubstanzen: Bestandteil (1) in einer Menge von 10 bis 70 Gew.-%, Bestandteil (2) in einer Menge von 10 bis 60 % und Bestanteil (3) in einer Menge von 1 bis 60 %, wobei der Einsatz von Bestandteil (1) in einer Menge von 20 bis 60 Gew. %, Bestandteil (2) in einer Menge von 20 bis 55 Gew. % und Bestandteil (3) in einer Menge von 10 bis 40 % bevorzugt ist. Besonders bevorzugt ist der Einsatz von Bestandteil (1) in einer Menge von 30 bis 50 Gew. %, Bestandteil (2) in einer Menge von 25 bis 50 Gew. % und Bestandteil (3) in einer Menge von 15 bis 30 %. Die Summe aller Bestandteile (1) bis (3) in den Mischungen ergibt dabei jeweils 100%.

Wie bereits ausgeführt, ist im Rahmen der vorliegenden Erfindung die Lewis-Säure vorzugsweise polymergebunden.

Als Polymer, an welches die Lewis-Säure gebunden sein kann, eignen sich beliebige polymere Systeme.

So können als Polymere, an welche die Lewis-Säure gebunden ist beispielsweise Polymere verwendet werden, welche ausgewählt werden aus der Gruppe, bestehend aus Acrylat-Kautschuk, (ACM), Ethylen-Acrylat-Kautschuk (AEM), Polyurethan-Kautschuk (PUR), Butyl-Kautschuk (IIR), Butadien-Kautschuk (BR), Brombutyl-Kautschuk (BIIR), Chlorbutyl-Kautschuk (CIIR), Epichlorhydrin-Polymer (CO), Chlorbutadien-Kautschuk (CR), Chlorsulfoniertes Polyethylenpolymer (CSM), Ethylenoxid-Epichlorhydrin-Kautschuk (ECO), Ethylen-Propylen-Dien-Kautschuk (EPDM), Ethylen-Methylacrylat-Copolymer (EMA), Perfluor-Kautschuk (FFPM), Fluor-Kautschuk (FPM), Fluormethylpolysiloxan (FVMQ), Isopren-Kautschuk (IR), Acrylnitril-Butadien-Kautschuk (NBR), Naturkautschuk (NR), Styrol-Butadien-Kautschuk (SBR), chloriertes Polyethylen (PE-C) und/oder Ethylen-Vinylacetat-Polymer (EVA / EVM) und/oder beliebige Mischungen dieser Polymere. Im Rahmen der vorliegenden Erfindung ist insbesondere die Verwendung von Butyl-Kautschuk (IIR) bevorzugt.

Diese polymergebundenen Lewis-Säuren werden hergestellt durch Vermischen des Polymers mit einer Lewis-Säure in gängigen Mischapparaturen, wie z.B. Innenmischer, nach dem Fachmann geläufigen Verfahren. Vorzugsweise liegt die Mischtempertur unterhalb von 100°C.

Im Rahmen der vorliegenden Erfindung ist es - wie bereits zuvor erwähnt - insbesondere bevorzugt, wenn die Lewis-Säure Zinn(II)-Chlorid-Dihydrat ist. Zu diesem Zweck wird insbesondere butylkautschukgebundenes Zinn(II)-Chlorid-Dihydrat verwendet.

Gegenstand der vorliegenden Erfindung ist ebenfalls butylkautschukgebundenes Zinn(II)-Chlorid-Dihydrat.

Darüber hinaus betrifft die vorliegende Erfindung ein Verfahren zur Herstellung eines entsprechenden butylkautschukgebundenen Zinn(II)-Chlorid-Dihydrats.

Entsprechende butylkautschukgebundene Zinn(II)-Chlorid-Dihydrat-Systeme können durch Vermischen von Zinn(II)-Chlorid-Dihydrat mit ungesättigten Isobutylen-Isopren-Copolymer, wie beispielsweise dem Lanxess Butyl 301 der Firma Lanxess, hergestellt werden. Zu diesem Zweck wird das Isobutylen-Isopren-Copolymer in einen Innenmischer gegeben und anschließend mit dem Zinn(II)-Chlorid-Dihydrat vermischt. Die Vermischung erfolgt dabei bei einer Temperatur zwischen 40 °C und 90 °C (Auswurftemperatur). Gegebenenfalls können in die Mischungsstufe weitere Additive gegeben werden, wie beispielsweise Zinkoxid, oder Silika (Träger).

Die vorliegende Erfindung betrifft darüber hinaus insbesondere auch die Verwendung von butylkautschukgebundenem Zinn(II)-Chlorid-Dihydrat als Vulkanisationsbeschleuniger.

Bei allen Verbindungen (1), (2) bzw. (3) handelt es sich um handelsübliche Produkte.

So ist 3-Methylthiazolidin-2-thion (1) bekannt und kann kommerziell erhalten werden. 3-Methylthiazolidin-2-thion wird beispielsweise als Rhenocure^{®} CRV und als Masterbatch unter dem Namen Rhenogran^{®} MTT-80 von der Rhein Chemie Rheinau GmbH vertrieben.

Tetrabenzylthiuramdisulfid ist bekannt und kann kommerziell erhalten werden. Tetrabenzylthiuramdisulfid wird beispielsweise als Masterbatch unter dem Namen Rhenogran^{®} TBzTD 70 von der Rhein Chemie Rheinau GmbH vertrieben.

Die Art der Zugabe der einzelnen Komponenten dieser Mischung unterliegt keiner besonderen Beschränkung und die Art der Zugabe kann vom Fachmann entsprechend ausgewählt werden.

In einer ersten Ausgestaltung wird jeder einzelne Bestandteil der erfindungsgemäßen Mischung in seiner Reinform den zu vulkanisierenden Elastomeren vor der Vulkanisation zugegeben. Die Zugabe erfolgt dabei entweder für jede Substanz separat oder in einer einzigen Reinsubstanz-Abmischung.

In einer zweiten Ausgestaltung können die einzelnen Bestandteile der erfindungsgemäßen Mischung in polymergebundener Form (Masterbatch-Konzentrat) verwendet werden. Die Zugabe erfolgt dabei entweder in einem Masterbatch-Konzentrat für jede der Substanzen (1), (2) und (3) separat oder in einer einzigen Masterbatch-Abmischung aller Bestandteile (1) bis (3).

Auch ist es möglich, einzelne Bestandteile der Mischung in Reinform zu verwenden und andere Bestandteile der Mischung in der Form eines Masterbatches zu verwenden.

Im Rahmen der vorliegenden Erfindung erfolgt die Zugabe vorzugsweise zumindest teilweise in der Form eines Masterbatches, wobei es insbesondere bevorzugt ist, wenn der erfindungsgemäße Bestandteil der Lewis-Säure in der Form eines Masterbatches verwendet wird. Die übrigen erfindungsgemäßen Bestandteile 3-Methylthiazolidin-2-thion (1) und (2) Thiuramdisulfid- oder Thiurampolysulfid-Derivat und/ oder Mercaptobenzothiazoldisulfid - können als Pulver oder Granulate vorliegen und können in dieser Form, aber auch als separate oder kombinierte Masterbatches im Rahmen der vorliegenden Erfindung verwendet werden.

Im Allgemeinen enthält ein Masterbatchkonzentrat von (1) 3-Methylthiazolidin-2-thion dieses in einer Menge von 20 bis 95 Gew.-%, insbesondere von 40 bis 90 Gew.-%, vorzugsweise von 50 bis 85 Gew.-%, besonders bevorzugt von 60 bis 80 Gew.-%, jeweils bezogen auf die Gesamtmenge an Masterbatch.
In einer weiteren Ausführungsform der vorliegenden Erfindung umfasst die erfindungsgemäße Mischung (2), d.h. ein Thiuramdisulfid-Derivat, ein Thiurampolysulfid-Derivat und/oder Mercaptobenzothiazoldisulfid als Masterbatchkonzentrat. Die Menge an Thiuramdisulfid-Derivat, Thiurampolysulfid-Derivat und/oder Mercaptobenzothiazoldisulfid in dem Masterbatch beträgt im Allgemeinen 20 bis 95 Gew.-%, insbesondere von 40 bis 90 Gew.-%, vorzugsweise von 50 bis 85 Gew.-%, besonders bevorzugt von 60 bis 80 Gew.-%, jeweils bezogen auf die Gesamtmenge an Masterbatch.

In einer weiteren Ausführungsform der vorliegenden Erfindung umfasst die erfindungsgemäße Mischung die Lewis-Säure (3) als Masterbatchkonzentrat. Die Menge an Lewis-Säure in dem Masterbatch beträgt im Allgemeinen 20 bis 95 Gew.-%, insbesondere von 25 bis 80 Gew.-%, vorzugsweise von 30 bis 70 Gew.-%, besonders bevorzugt von 35 bis 60 Gew.-%, jeweils bezogen auf die Gesamtmenge an Masterbatch.

Für den Fall dass alle Bestandteile (1) bis (3) in dem Masterbatch enthalten sind, entsprechen die Mengen an (1) bis (3) denen der erfindungsgemäßen Mischung.

In einer weiteren Ausführungsform der vorliegenden Erfindung enthält die erfindungsgemäße Mischung zusätzlich Zinkoxid und/oder mindestens einen Kautschuk enthält, welcher ausgewählt ist aus der Gruppe, bestehend aus Acrylat-Kautschuk, (ACM), Ethylen-Acrylat-Kautschuk (AEM), Polyurethan-Kautschuk (PUR), Butyl-Kautschuk (IIR), Butadien-Kautschuk (BR), Brombutyl-Kautschuk (BIIR), Chlorbutyl-Kautschuk (CIIR), Epichlorhydrin-Polymer (CO), Chlorbutadien-Kautschuk (CR), Chlorsulfoniertes Polyethylenpolymer (CSM), Ethylenoxid-Epichlorhydrin-Kautschuk (ECO), Ethylen-Propylen-Dien-Kautschuk (EPDM), Perfluor-Kautschuk (FFPM), Fluor-Kautschuk (FPM), Fluormethylpolysiloxan (FVMQ), Isopren-Kautschuk (IR), Acrylnitril-Butadien-Kautschuk (NBR), Naturkautschuk (NR), Styrol-Butadien-Kautschuk (SBR), chloriertes Polyethylen (PE-C) und/oder Ethylen-Vinylacetat-Polymer (EVA / EVM) und/oder Mischungen davon.

Darüber hinaus kann die erfindungsgemäße Mischung Alterungs- und Ozonschutzmittel sowie verstärkende Füllstoffe umfassen. Bei den verstärkenden Füllstoffen kann es sich beispielsweise um Ruß und/oder Kieselsäure handeln.

Die vorliegende Erfindung betrifft die vorstehend näher beschriebene Mischung, welche - wie bereits erwähnt - als separate Masterbatches oder in Form der reinen Chemikalien verwendet werden kann.

Die erfindungsgemäße Mischung wird dadurch hergestellt, dass man die einzelnen Bestandteile der Mischung nach den dem Fachmann geläufigen Methoden miteinander vermischt. Dieses Verfahren ist ebenfalls Gegenstand der vorliegenden Erfindung.

Darüber hinaus betrifft die vorliegende Erfindung die Verwendung der zuvor beschriebenen Mischung als Vulkanisationsbeschleuniger.

Gegenstand der Erfindung ist auch ein Verfahren zur Herstellung eines Vulkanisats, wonach die Bestandteile der Mischung einzeln oder zusammen in Reinform oder in der Form von separaten Masterbatchkonzentraten oder in Kombinationen von Reinform und einem mehrere Bestandteile enthaltenden Masterbatchkonzentrat dem zu vulkanisierenden Kautschuk zugegeben und anschließend vulkanisiert werden.

Die Vulkanisation erfolgt nach den dem Fachmann geläufigen Methoden, wie z.B. beim Injection Moulding in einer beheizten Form.

Die Zugabe der erfindungsgemäßen Mischung kann über die Einzelbestandteile oder als Mischung der Einzelbestandteile (1) bis (3) erfolgen. Für den Fall, der getrennten Zugabe ist zu gewährleisten, dass eine gleichzeitige vulkanisationsbeschleunigende Wirkung der einzelnen Komponenten während der Vulkanisation gewährleistet ist.

Das erfindungsgemäße Vulkanisationsbeschleuniger-System kann für beliebige halogenhaltige Kautschukarten verwendet werden. Dem gemäß kann das erfindungsgemäße System für alle beliebigen und unvernetzten, aber vernetzbaren Polymere mit gummielastischen Eigenschaften verwendet werden. Insbesondere kann als vulkanisierender Kautschuk, wie erfindungsgemäß zu verwenden, ein Kautschuk verwendet werden, welcher im Allgemeinen für Reifen oder andere Kautschukanwendungen bisher verwendet wurde.

Insbesondere eignet sich die erfindungsgemäße Mischung als Vulkanisationsbeschleuniger für Kautschuke, welche ausgewählt werden aus der Gruppe, bestehend aus Chloropren-Kautschuk (CR), Butyl-Kautschuk (IIR), Brombutyl-Kautschuk (BIIR), Chlorbutyl-Kautschuk (CIIR), Epichlorhydrin-Polymer (CO), Chlorsulfoniertes Polyethylenpolymer. (CSM), Epichlorhydrin-Kautschuk (CO) Ethylenoxid-Epichlorhydrin-Kautschuk (ECO), Chloriertes Polyethylenpolymer (CM) und andere Kautschuke oder Mischungen davon.

Gegenstand der vorliegenden Erfindung sind auch die Vulkanisate, erhältlich nach einem erfindungsgemäßen Verfahren.

Gegenstand der vorliegenden Erfindung ist daher auch die Verwendung von
(1) 3-Methylthiazolidin-2-thion als einen ersten Bestandteil,
(2) einem zweiten Bestandteil, ausgewählt aus der Gruppe, Thiuramdisulfid-Derivat, Thiurampolysulfid-Derivat und/oder Mercaptobenzothiazoldisulfid, und
(3) mindestens einer Lewis-Säure als dritten Bestandteil, die vorzugsweise polymergebunden ist,
als Vulkanisationsbeschleuniger, wobei die einzelnen zuvor genannten Komponenten nicht in einer physikalisch Mischung verwendet werden, sondern einzeln dem zu vulkanisierenden Kautschuk zugegeben werden. Die Zugabe der einzelnen Komponenten erfolgt dabei im Allgemeinen so, dass eine gleichzeitige Wirkung der einzelnen Komponenten während der Vulkanisation gewährleistet ist. Insbesondere erfolgt die Zugabe der einzelnen Komponenten unmittelbar nacheinander.

Die einzelnen Bestandteile werden vorzugsweise in folgenden Mengen zur Vulkanisation eingesetzt:
Der erste Bestandteil 3-Methylthiazolidin-2-thion wird im Allgemeinen in einer Menge von 0,10 bis 10,00 Gew.-Teilen, insbesondere 0,25 bis 5,00 Gew.-Teilen, vorzugsweise 0,40 bis 3,50 Gew.-Teilen, besonders bevorzugt 0,60 bis 2,00 Gew.-Teile, jeweils bezogen auf 100 Gew.-Teile des zu vulkanisierenden Polymers, eingesetzt.

Der zweite Bestandteil, ausgewählt aus der Gruppe, bestehend aus einem Thiuramdisulfid-Derivat, einem Thiurampolysulfid-Derivat und Mercaptobenzothiazoldisulfid, wird im Allgemeinen in einer Menge von 0,10 bis 10,00 Gew.-Teilen, insbesondere 0,25 bis 7,50 Gew.-Teilen, vorzugsweise 0,50 bis 5,00 Gew.-Teilen, besonders bevorzugt 0,70 bis 3,00 Gew.-Teile, jeweils bezogen auf 100 Gew.-Teile des zu vulkanisierenden Polymers, eingesetzt.

Der dritte Bestandteil einer Lewis-Säure wird im Allgemeinen in einer Menge von 0,10 bis 10,00 Gew.-Teilen, insbesondere 0,50 bis 8,00 Gew.-Teilen, vorzugsweise 0,60 bis 6,00 Gew.-Teilen, besonders bevorzugt 0,70 bis 4,00 Gew.-Teile, jeweils bezogen auf 100 Gew.-Teile des zu vulkanisierenden Polymers, eingesetzt.

Wenn die einzelnen Bestandteile in der Form eines Masterbatches verwendet werden, so wird die erforderliche Menge an Masterbatch in Abhängigkeit der Konzentration der einzelnen reaktiven Komponente in dem Masterbatch bestimmt, so dass die vorstehend angegebenen Mengen an den einzelnen Bestandteilen im Verhältnis zu dem zu vulkanisierenden Polymer erreicht werden.

Besonders bevorzugt ist eine kautschukhaltige Mischung die, jeweils bezogen auf den Kautschuk,
(1) den erste Bestandteil 3-Methylthiazolidin-2-thion in einer Menge von 0,10 bis 10,00 Gew.-Teilen; und
(2) den zweite Bestandteil, ausgewählt aus der Gruppe, bestehend aus Thiuramdisulfid-Derivat, Thiurampolysulfid-Derivat und/oder Mercaptobenzothiazoldisulfid, in einer Menge von 0,10 bis 10,00 Gew.-Teilen; und
(3) den dritten Bestandteil mindestens einer Lewis-Säure in einer Menge von 0,10 bis 10,00 Gew.-Teilen
umfasst.

Gegenstand der vorliegenden Erfindung sind auch die unter Verwendung der erfindungsgemäßen Additiv-Mischung hergestellten Kautschuke, Kautschukmischungen oder Kautschukprodukte. Die mit dem erfindungsgemäßen Vulkanisationsbeschleuniger hergestellten Vulkanisate eignen sich beispielsweise zur Herstellung von Kraftfahrzeugreifen, Dichtungen, jeglicher Form von Riemen, Kabelummantelungen, Neoprenanzügen, Federbälgen, Staubkappen und schwingungsmechanischen Bauteilen.

Die vorliegende Erfindung wird anhand der nachfolgenden Beispiele näher erläutert, ohne dabei limitierend zu wirken.

### Beispiele:

Es werden Vulkanisationen an Baypren^{®} 110 gemäß nachfolgenden Versuchen A, B, C und D durchgeführt.

In der Versuchsdurchführung A wird ein herkömmliches Vulkanisationsbeschleunigersystem auf Basis Ethylenthioharnstoff (Rhenogran^{®} ETU-80) in Kombination mit Tetramethylthiuramdisulfid (Rhenogran^{®} TMTD-70) verwendet (Vergleichsbeispiel).

In der Versuchsdurchführung B (Vergleichsversuch) wird ein Vulkanisationsbeschleunigersystem auf Basis von Rhenocure^{®} CRV (3-Methylthiazolidin-2-thion), ohne die Komponenten (2) und (3), verwendet.

In der Versuchsdurchführung C (Vergleichsversuch) wird zusätzlich zu Variante B mit Rhenogran^{®} TBZTD-70 (Tetrabenzylthiuramdisulfid)die Komponente (2) verwendet und in Versuchsdurchführung D schließlich zusätzlich zu Variante C Rhenogran^{®} GE 2012, eine butylkautschukgebundene Mischung von SnCl₂ Dihydrat (3) verwendet (erfindungsgemäßes Beispiel).

**Tabelle 1:**

| **Bestandteil** | **A** Vergleich | **B** Vergleich | **C** Vergleich | **D** Erfindungsgemäß |
|---|---|---|---|---|
| Baypren® 110 | 100,0 | 100,0 | 100,0 | 100,0 |
| CB N-550 | 55,0 | 55,0 | 55,0 | 55,0 |
| Rhenofit® D/A | 4,0 | 4,0 | 4,0 | 4,0 |
| Zinkoxid WS | 4,0 | 4,0 | 4,0 | 4,0 |
| Aflux® 16 | 1,0 | 1,0 | 1,0 | 1,0 |
| Stearinsäure | 1,0 | 1,0 | 1,0 | 1,0 |
| Antilux® 654 | 1,0 | 1,0 | 1,0 | 1,0 |
| 6PPD | 1,0 | 1,0 | 1,0 | 1,0 |
| Rhenofit® OCD | 2,0 | 2,0 | 2,0 | 2,0 |
| Rhenosin® W 95 | 5,0 | 5,0 | 5,0 | 5,0 |
| Rhenogran® ETU-80 (Ethylenthioharnstoff, 80%ig) | 1,5 | - | - | - |
| Rhenogran® TMTD-70 (Tetramethylthiuramtetrasulfid, 70%ig) | 1,0 | - | - | - |
| Rhenocure® CRV (3-Methylthiazolidin-2-thion, 100%ig) | - | 1,5 | 1,5 | 1,5 |
| Butylkautschukgebundenes SnCl₂ Dihydrat (40%ig) | - | - | - | 1,5 |
| Rhenogran® TBzTD-70 (Tetrabenzylthiuramdisulfid, 70%ig ) | - | - | 2,5 | 2,5 |

| | | | | |
|---|---|---|---|---|
| **Baypren® 110:** Polychloroprenkautschuk (CR), kommerziell erhältlich von der Lanxess Deutschland GmbH. **CB N-550:** Handelsüblicher Ruß des Typs N-550 von der Evonik Degussa AG. **Rhenofit® D/A:** Magnesiumoxid, kommerziell erhältlich von der Rhein Chemie Rheinau GmbH **Zinkoxid WS:** Handelsübliches Zinkoxid des Typs "Weißsiegel"von der Firma Grillo Aflux® **16:** Prozeßhilfsmittel auf Fettsäureamidbasis, kommerziell erhältlich von der Rhein Chemie Rheinau GmbH Antilux® **654:** Mikrokristallines Ozonschutzwachs, kommerziel erhältlich von der Rhein Chemie Rheinau GmbH **6PPD**: Antioxidans auf Basis Paraphenylendiamin, kommerziell erhältlich von Lanxess Deutschland GmbH als Vulkanox® 4020 Rhenofit® **OCD:** Antioxidans auf Basis Diphenylamin, kommerziel erhältlich von der Rhein Chemie Rheinau GmbH Rhenosin® **W 95:** Esterweichmacher, kommerziel erhältlich von der Rhein Chemie Rheinau GmbH | | | | |

**Tabelle 2:**

| | **A** | **B** | **C** | **D** |
|---|---|---|---|---|
| **Mooney Viskosität** | | | | |
| ML (1+4) @100°C [MU] | 82 | 88 | 79 | 74 |
| **Mooney Scorch @ 130°C** | | | | |
| T5 [min] | 6.2 | 7.4 | 14.9 | 8.9 |
| T35 [min] | 9.3 | 18.4 | 21.6 | 12.8 |
| **MDR 170°C, 30 min** | | | | |
| ML, [dNm] | 2.5 | 2.9 | 2.5 | 2.4 |
| MH, [dNm] | 24.9 | 31.3 | 23.5 | 24.8 |
| t10, [min] | 0.8 | 1.6 | 1.8 | 0.8 |
| t50, [min] | 1.6 | 4.9 | 4.0 | 1.6 |
| t90, [min] | 4.2 | 8.8 | 9.5 | 4.1 |

**Tabelle 3:**

| | **A** | **B** | **C** | **D** |
|---|---|---|---|---|
| **Härte** | | | | |
| Härte [ShA] | 77 | 80 | 74 | 74 |
| **Zug / Dehnung** | | | | |
| Bruchdehnung [%] | 245 | 190 | 260 | 260 |
| Zugfestigkeit [MPa] | 21.0 | 20.1 | 20.3 | 20.4 |

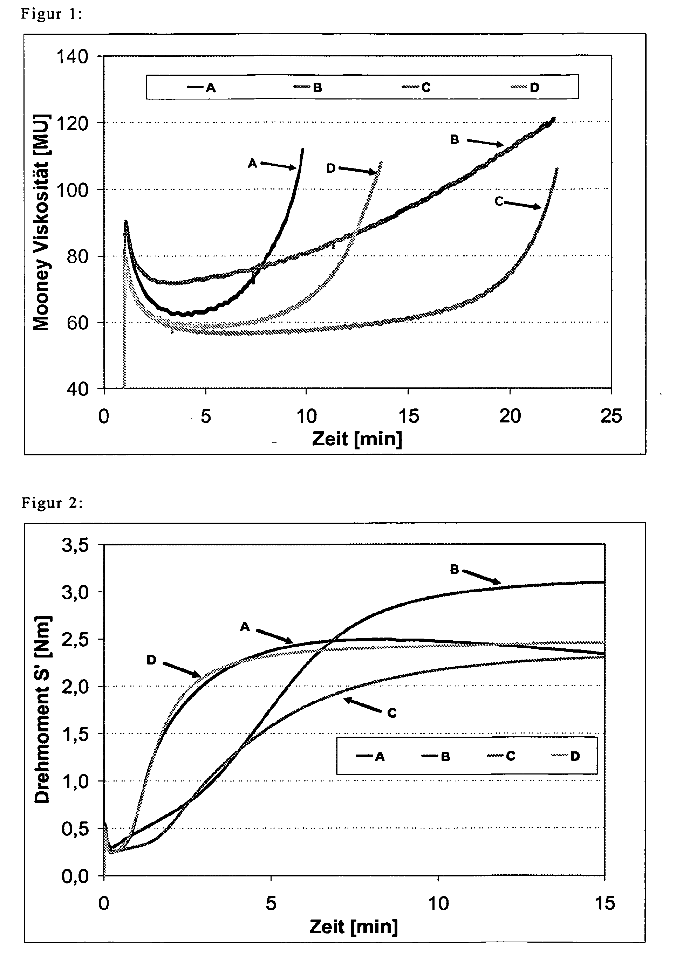

Die Figuren 1 und 2 zeigen graphisch die einzelnen Ergebnisse:

Die Figur 1 zeigt der Verlauf des Mooney Scorch bei 130 °C gegenüber der Zeit (in Minuten).

Die Figur 2 zeigt den Verlauf der Vernetzung bei 170 °C gegenüber der Zeit (in Minuten).
Der entscheidende Vorteil der erfindungsgemäßen Mischung ist, wie aus den vorstehenden Tabellen 2 und 3 ableitbar, darin zu sehen, dass durch die entsprechende Zudosierung der Lewis-Säure die Vernetzungsgeschwindigkeit individuell einstellbar ist. Versuch B zeigt von vornherein eine höhere Viskosität was ungünstig für die Verarbeitung der Kautschukmischung ist. Zudem ist die Vernetzung deutlich langsamer, was längere Zykluszeiten in der Produktion erzwingt. Versuch C zeigt vom Viskositätsniveau her ein günstigeres Verhalten, ist jedoch ebenfalls in der Ausvulkanisation zu langsam. Versuch D zeigt ein günstigeres Verhalten in der Anvulkanisation als Versuch A und gewährleistet damit ausreichend Prozeßsicherheit in einer Produktion. Der zeitliche Verlauf der Vernetzung bei 170 °C von Versuch D ist deckungsgleich zu Versuch A, was eine kurze Zykluszeit und eine kurze Temperaturbelastung des Werkstoffs ohne toxikologische Begleiterscheinungen in der Produktion ermöglicht. Die vorliegende Erfindung zeigt das günstigste Verarbeitungs- und Vernetzungsverhalten und generiert zudem durch Ersetzen des TMTD durch TBzTD keinerlei kanzerogenen Nitrosamine. Über die Menge der zudosierten Lewis-Säure kann die Vernetzungsgeschwindigkeit an das jeweils zu vulkanisierende System entsprechend den Prozeßerfordernissen angepasst werden. Dabei wird das ausgeprägte Viskositätsminimum, welches durch die Kombination Ethylenthioharnstoff und Tetramethylthiuramdisulfid erhalten wird, auch durch die erfindungsgemäße Mischung realisiert.

Zudem ist das erfindungsgemäße System frei von Stoffen, die kanzerogen oder erbgutschädigend sind, bzw. kanzerogene Stoffe freisetzen.

## Patentansprüche

1. Mischung, umfassend
(1) als einen ersten Bestandteil 3-Methylthiazolidin-2-thion,
(2) einen zweiten Bestandteil, ausgewählt aus der Gruppe, bestehend aus einem Thiuramdisulfid-Derivat, einem Thiurampolysulfid-Derivat und/oder Mercaptobenzothiazoldisulfid, und
(3) als dritten Bestandteil mindestens eine Lewis-Säure,
ausgewählt aus der Gruppe bestehend aus Zinn(II)-chlorid, Zinn(II)-chlorid-Dihydrat, Zinndioctanoat, Zinnoxalat, Dibutylzinncarboxylat, Monobutylzinntris(2-ethylhexanoat), Dibutylzinndiisooctanoat, Dibutylzinndiacetat, Dibutylzinnoxid, Aluminium(III)-Chlorid, Titantetrachlorid, Antimonpentachlorid, Zinkchlorid und/oder Zinkchlorid-Dihydrat.

2. Mischung nach Anspruch 1, **dadurch gekennzeichnet, dass** die Lewis-Säure an einem Polymer gebunden ist, welches ausgewählt ist aus der Gruppe, bestehend aus Acrylat-Kautschuk, (ACM), Ethylen-Acrylat-Kautschuk (AEM), Polyurethan-Kautschuk (PUR), Butyl-Kautschuk (IIR), Butadien-Kautschuk (BR), Brombutyl-Kautschuk (BIIR), Chlorbutyl-Kautschuk (CIIR), Epichlorhydrin-Polymer (CO), Chlorbutadien-Kautschuk (CR), Chlorsulfoniertes Polyethylenpolymer (CSM), Ethylenoxid-Epichlorhydrin-Kautschuk (ECO), Ethylen-Propylen-Dien-Kautschuk (EPDM), Ethylen-Methylacrylat-Copolymer (EMA), Perfluor-Kautschuk (FFPM), Fluor-Kautschuk (FPM), Fluormethylpolysiloxan (FVMQ), Isopren-Kautschuk (IR), Acrylnitril-Butadien-Kautschuk (NBR), Naturkautschuk (NR), Styrol-Butadien-Kautschuk (SBR), chloriertes Polyethylen (PE-C) und/oder Ethylen-Vinylacetat-Polymer (EVA / EVM) und/oder beliebigen Mischungen dieser Polymere.

3. Mischung nach einem der Ansprüche 1 bis 2, **dadurch gekennzeichnet, dass** die Thiurampolysulfid-Derivate Verbindungen der folgenden Formel (I) 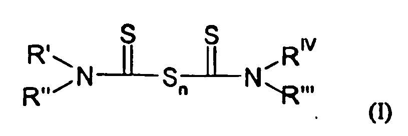 sind,
mit R^{I}, R^{II}, R^{III} oder R^{IV}, jeweils gleich oder verschieden, einer arylischen, aliphatischen oder cyclischen Alkylgruppe mit bis zu 8 Kohlenstoffatome entspricht und n=2-6 ist und die Thiuramdisulfid-Derivate der Formel (I) mit n=2 entsprechen und R^{I}, R^{II}, R^{III} oder R^{IV} die vorgenannte Bedeutung haben.

4. Mischung nach einem der Ansprüche 1 bis 3, **dadurch gekennzeichnet, dass** die Mischung zusätzlich Zinkoxid und/oder mindestens einen Kautschuk enthält, welcher ausgewählt ist aus der Gruppe, bestehend aus Acrylat-Kautschuk, (ACM), Ethylen-Acrylat-Kautschuk (AEM), Polyurethan-Kautschuk (PUR), Butyl-Kautschuk (IIR), Butadien-Kautschuk (BR), Brombutyl-Kautschuk (BIIR), Chlorbutyl-Kautschuk (CIIR), Epichlorhydrin-Polymer (CO), Chlorbutadien-Kautschuk (CR), Chlorsulfoniertes Polyethylenpolymer (CSM), Ethylenoxid-Epichlorhydrin-Kautschuk (ECO), Ethylen-Propylen-Dien-Kautschuk (EPDM), Perfluor-Kautschuk (FFPM), Fluor-Kautschuk (FPM), Fluormethylpolysiloxan (FVMQ), Isopren-Kautschuk (IR), Acrylnitril-Butadien-Kautschuk (NBR), Naturkautschuk (NR), Styrol-Butadien-Kautschuk (SBR), chloriertes Polyethylen (PE-C) und/oder Ethylen-Vinylacetat-Polymer (EVA / EVM) und/oder Mischungen davon.

5. Mischung nach Anspruch 4, **dadurch gekennzeichnet, dass** die Mischung, jeweils bezogen auf den Kautschuk gemäß Anspruch 4,
(1) den erste Bestandteil 3-Methylthiazolidin-2-thion in einer Menge von 0,10 bis 10,00 Gew.-Teilen; und
(2) den zweite Bestandteil, ausgewählt aus der Gruppe, bestehend aus Thiuramdisulfid-Derivat, Thiurampolysulfid-Derivat und/oder Mercaptobenzothiazoldisulfid, in einer Menge von 0,10 bis 10,00 Gew.-Teilen; und
(3) den dritten Bestandteil mindestens einer Lewis-Säure in einer Menge von 0,10 bis 10,00 Gew.-Teilen
umfasst.

6. Mischung nach einem der Ansprüche 1 bis 5, **dadurch gekennzeichnet, dass** die einzelnen Bestandteile
(1) 3-Methylthiazolidin-2-thion,
(2) Thiuramdisulfid-Derivat, Thiurampolysulfid-Derivat oder Mercaptobenzothiazoldisulfid, wobei Tetrabenzylthiuramdisulfid besonders bervorzugt ist, und
(3) die Lewis-Säure
in ihrer jeweiligen Reinform oder in der Form eines Masterbatchkonzentrates in der Mischung umfasst sind.

7. Verfahren zur Herstellung einer Mischung gemäß einem der Ansprüche 1 bis 6, **dadurch gekennzeichnet, dass** man die einzelnen Bestandteile der Mischung miteinander mischt.

8. Verfahren zur Herstellung eines Vulkanisats, **dadurch gekennzeichnet, dass** eine Mischung gemäß einem der Ansprüche 1 bis 3 als Vulkansisationsbeschleuniger verwendet wird.

9. Verfahren nach Anspruch 8, **dadurch gekennzeichnet, dass** die Mischung als Vulkanisationsbeschleuniger für Chloropren-Kautschuk (CR), Butyl-Kautschuk (IIR), Brombutyl-Kautschuk (BIIR), Chlorbutyl-Kautschuk (CIIR), Epichlorhydrin-Polymer (CO), chlorsulfoniertes Polyethylenpolymer (CSM), Epichlorhydrin-Kautschuk (CO), Ethylenoxid-Epichlorhydrin-Kautschuk (ECO), Chloriertes Polyethylenpolymer (CM) und andere Kautschuke oder Mischungen davon verwendet wird.

10. Verfahren nach Anspruch 8 oder 9, **dadurch gekennzeichnet, dass** die Bestandteile der Mischung gemäß einem der Ansprüche 1 bis 3 einzeln oder zusammen in Reinform oder in der Form von separaten Masterbatchkonzentraten oder in Kombinationen von Reinform und einem mehrere Bestandteile enthaltenden Masterbatchkonzentrat dem zu vulkanisierenden Kautschuk zugegeben und anschließend vulkanisiert werden.

11. Verfahren nach Anspruch 10, **dadurch gekennzeichnet, dass** die Zugabe der einzelnen Komponenten in dem Fall der getrennten Zugabe dabei so erfolgt, dass eine gleichzeitige vulkanisationsbeschleunigende Wirkung der einzelnen Komponenten während der Vulkanisation gewährleistet ist.

12. Vulkanisat, erhältlich nach einem Verfahren gemäß einem der Ansprüche 7 bis 11.

13. Masterbatch, enthaltend butylkautschukgebundenes Zinn (II)-Chlorid-Dihydrat mit einer Konzentration an Zinn(II)-Chlorid von 20 - 95 Gew.%.

14. Verfahren zur Herstellung von butylkautschukgebundenem Zinn(II)-Chlorid-Dihydrat nach Anspruch 13, **dadurch gekennzeichnet, dass** Zinn(II)-Chlorid-Dihydrat mit einem ungesättigten Isobutylen-Isopren-Copolymer vermischt wird.

15. Verwendung von butylkautschukgebundenem Zinn(II)-Chlorid-Dihydrat nach Anspruch 13 als Vulkanisationsbeschleuniger.

## Claims

1. Mixture encompassing
(1) as a first constituent, 3-methylthiazolidine-2-thione,
(2) a second constituent selected from the group consisting of a thiuram disulphide derivative, a thiuram polysulphide derivative and/or mercaptobenzothiazole disulphide, and
(3) as third constituent, at least one Lewis acid
selected from the group consisting of stannous chloride, stannous chloride dihydrate, tin dioctanoate, tin oxalate, dibutyltin carboxylate, monobutyltin tris(2-ethylhexanoate), dibutyltin diisooctanoate, dibutyltin diacetate, dibutyltin oxide, aluminium(III) chloride, titanium tetrachloride, antimony pentachloride, zinc chloride and/or zinc chloride dihydrate.

2. Mixture according to Claim 1, **characterized in that** the Lewis acid has been bound on a polymer selected from the group consisting of acrylate rubber (ACM), ethylene-acrylate rubber (AEM), polyurethane rubber (PU), butyl rubber (IIR), butadiene rubber (BR), bromobutyl rubber (BIIR), chlorobutyl rubber (CIIR), epichlorohydrin polymer (CO), chlorobutadiene rubber (CR), chlorosulphonated polyethylene polymer (CSM), ethylene oxide-epichlorohydrin rubber (ECO), ethylene-propylene-diene rubber (EPDM), ethylene-methyl acrylate copolymer (EMA), perfluoro rubber (FFPM), fluoro rubber (FPM), fluoromethylpolysiloxane (FVMQ), isoprene rubber (IR), acrylonitrile-butadiene rubber (NBR), natural rubber (NR), styrene-butadiene rubber (SBR), chlorinated polyethylene (PEC) and/or ethylene-vinyl acetate polymer (EVA/EVM) and/or of any desired mixtures of these polymers.

3. Mixture according to either of Claims 1 and 2, **characterized in that** the thiuram polysulphide derivatives are compounds of the following formula (I) 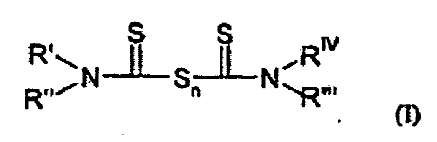 where R^{I} , R^{II}, R^{III} or R^{IV}, in each case identical or different, correspond to an arylic, aliphatic or cyclic alkyl group having up to 8 carbon atoms, and n = 2 - 6, and the thiuram disulphide derivatives correspond to the formula (I), where n = 2 and R^{I}, R^{II}, R^{III} or R^{IV} is as defined above.

4. Mixture according to any of Claims 1 to 3, **characterized in that** the mixture also comprises zinc oxide and/or at least one rubber selected from the group consisting of acrylate rubber (ACM), ethylene-acrylate rubber (AEM), polyurethane rubber (PU), butyl rubber (IIR), butadiene rubber (BR), bromobutyl rubber (BIIR), chlorobutyl rubber (CIIR), epichlorohydrin polymer (CO), chlorobutadiene rubber (CR), chlorosulphonated polyethylene polymer (CSM), ethylene oxide-epichlorohydrin rubber (ECO), ethylene-propylene-diene rubber (EPDM), perfluoro rubber (FFPM), fluoro rubber (FPM), fluoromethylpolysiloxane (FVMQ), isoprene rubber (IR), acrylonitrile-butadiene rubber (NBR), natural rubber (NR), styrene-butadiene rubber (SBR), chlorinated polyethylene (PEC) and/or ethylene-vinyl acetate polymer (EVA/EVM) and/or of mixtures of these polymers.

5. Mixture according to Claim 4, **characterized in that** the mixture encompasses, based in each case on the rubber according to Claim 4,
(1) an amount of from 0.10 to 10.00 parts by weight of the first constituent 3-methylthiazolidine-2-thione; and
(2) an amount of from 0.10 to 10.00 parts by weight of the second constituent selected from the group consisting of thiuram disulphide derivative, thiuram polysulphide derivative and/or mercaptobenzothiazole disulphide; and
(3) an amount of from 0.10 to 10.00 parts by weight of the third constituent: at least one Lewis acid.

6. Mixture according to any of Claims 1 to 5, **characterized in that** the mixture encompasses the individual constituents
(1) 3-methylthiazolidine-2-thione,
(2) thiuram disulphide derivative, thiuram polysulphide derivative or mercaptobenzothiazole disulphide, particular preference being given to tetrabenzylthiuram disulphide, and
(3) the Lewis acid
in their respective pure form or in the form of a masterbatch concentrate.

7. Process for producing a mixture according to any of Claims 1 to 6, **characterized in that** the individual constituents of the mixture are mixed with one another.

8. Process for producing a vulcanizate, **characterized in that** a mixture according to any of Claims 1 to 3 is used as vulcanization accelerator.

9. Process according to Claim 8, **characterized in that** the mixture is used as vulcanization accelerator for chloroprene rubber (CR), butyl rubber (IIR), bromobutyl rubber (BIIR), chlorobutyl rubber (CIIR), epichlorohydrin polymer (CO), chlorosulphonated polyethylene polymer (CSM), epichlorohydrin rubber (CO), ethylene oxide-epichlorohydrin rubber (ECO), chlorinated polyethylene polymer (CM) and other rubbers and mixtures thereof.

10. Process according to Claim 8 or 9, **characterized in that** the constituents of the mixture according to any of Claims 1 to 3 are added individually or together in pure form or in the form of separate masterbatch concentrates or in combinations of pure form and of a masterbatch concentrate comprising a plurality of constituents to the rubber requiring vulcanization, and are then vulcanized.

11. Process according to Claim 10, **characterized in that**, in the case of separate addition, the addition of the individual components here takes place in such a way as to ensure simultaneous vulcanization-accelerating action of the individual components during vulcanization.

12. Vulcanizate obtainable by a process according to any of Claims 7 to 11.

13. Masterbatch comprising butyl-rubber-bound stannous chloride dihydrate with from 20 to 95% by weight concentration of stannous chloride.

14. Process for producing butyl-rubber-bound stannous chloride dihydrate according to Claim 13, **characterized in that** stannous chloride dihydrate is mixed with an unsaturated isobutylene-isoprene copolymer.

15. Use of butyl-rubber-bound stannous chloride dihydrate according to Claim 13 as vulcanization accelerator.

## Revendications

1. Mélange, comprenant
(1) comme premier constituant de la 3-méthylthiazolidine-2-thione,
(2) un deuxième constituant, choisi dans le groupe constitué par un dérivé de disulfure de thiuram, un dérivé de polysulfure de thiuram et/ou un disulfure de mercaptobenzothiazole, et
(3) comme troisième constituant au moins un acide de Lewis,
choisi dans le groupe constitué par le chlorure d'étain (II), le chlorure d'étain (II) dihydraté, le dioctanoate d'étain, l'oxalate d'étain, le carboxylate de dibutylétain, le tris(2-éthylhexanoate) de monobutylétain, le diisooctanoate de dibutylétain, le diacétate de dibutylétain, l'oxyde de dibutylétain, le chlorure d'aluminium (III), le tétrachlorure de titane, le pentachlorure d'antimoine, le chlorure de zinc et/ou le chlorure de zinc dihydraté.

2. Mélange selon la revendication 1, **caractérisé en ce que** l'acide de Lewis est lié à un polymère qui est choisi dans le groupe constitué par le caoutchouc d'acrylate (ACM), le caoutchouc d'éthylène-acrylate (AEM), le caoutchouc de polyuréthane (PUR), le caoutchouc de butyle (IIR), le caoutchouc de butadiène (BR), le caoutchouc de bromobutyle (BIIR), le caoutchouc de chlorobutyle (CIIR), le polymère d'épichlorhydrine (CO), le caoutchouc de chlorobutadiène (CR), un polymère de polyéthylène chlorosulfoné (CSM), le caoutchouc d'oxyde d'éthylène-épichlorhydrine (ECO), le caoutchouc d'éthylène-propylène-diène (EPDM), le copolymère d'éthylène-acrylate de méthyle (EMA), le caoutchouc perfluoré (FFPM), le caoutchouc fluoré (FPM), le fluorométhylpolysiloxane (FVMQ), le caoutchouc d'isoprène (IR), le caoutchouc d'acrylonitrile-butadiène (NBR), le caoutchouc naturel (NR), le caoutchouc de styrène-butadiène (SBR), le polyéthylène chloré (PE-C) et/ou le polymère d'éthylène-acétate de vinyle (EVA/EVM) et/ou les mélanges quelconques de ces polymères.

3. Mélange selon l'une quelconque des revendications 1 à 2, **caractérisé en ce que** les dérivés de polysulfure de thiuram sont des composés de la formule (I) suivante 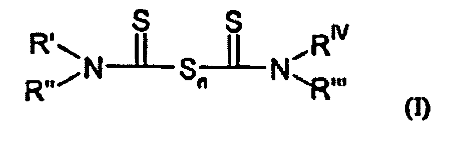 avec R^{I}, R^{II}, R^{III} ou R^{IV}, à chaque fois identiques ou différents, correspondant à un groupe alkyle arylique, aliphatique ou cyclique comprenant jusqu'à 8 atomes de carbone et n = 2 - 6 et les dérivés de disulfure de thiuram correspondent à la formule (I) avec n = 2 et R^{I}, R^{II}, R^{III} ou R^{IV} présentent la signification susmentionnée.

4. Mélange selon l'une quelconque des revendications 1 à 3, **caractérisé en ce que** le mélange contient en outre de l'oxyde de zinc et/ou au moins un caoutchouc, qui est choisi dans le groupe constitué par le caoutchouc d'acrylate (ACM), le caoutchouc d'éthylène-acrylate (AEM), le caoutchouc de polyuréthane (PUR), le caoutchouc de butyle (IIR), le caoutchouc de butadiène (BR), le caoutchouc de bromobutyle (BIIR), le caoutchouc de chlorobutyle (CIIR), le polymère d'épichlorhydrine (CO), le caoutchouc de chlorobutadiène (CR), un polymère de polyéthylène chlorosulfoné (CSM), le caoutchouc d'oxyde d'éthylène-épichlorhydrine (ECO), le caoutchouc d'éthylène-propylène-diène (EPDM), le caoutchouc perfluoré (FFPM), le caoutchouc fluoré (FPM), le fluorométhylpolysiloxane (FVMQ), le caoutchouc d'isoprène (IR), le caoutchouc d'acrylonitrile-butadiène (NBR), le caoutchouc naturel (NR), le caoutchouc de styrène-butadiène (SBR), le polyéthylène chloré (PE-C) et/ou le polymère d'éthylène-acétate de vinyle (EVA/EVM) et/ou leurs mélanges.

5. Mélange selon la revendication 4, **caractérisé en ce que** le mélange comprend, à chaque fois par rapport au caoutchouc selon la revendication 4,
(1) le premier constituant, la 3-méthylthiazolidine-2-thione, en une quantité de 0,10 à 10,00 parties en poids ; et
(2) le deuxième constituant, choisi dans le groupe constitué par un dérivé de disulfure de thiuram, un dérivé de polysulfure de thiuram et/ou un disulfure de mercaptobenzothiazole, en une quantité de 0,10 à 10,00 parties en poids ; et
(3) le troisième constituant, au moins un acide de Lewis, en une quantité de 0,10 à 10,00 parties en poids.

6. Mélange selon l'une quelconque des revendications 1 à 5, **caractérisé en ce que** les différents constituants
(1) la 3-méthylthiazolidine-2-thione,
(2) le dérivé de disulfure de thiuram, le dérivé de polysulfure de thiuram ou le disulfure de mercaptobenzothiazole, où le disulfure de tétrabenzylthiuram est particulièrement préféré, et
(3) l'acide de Lewis
sont englobés dans le mélange, à chaque fois sous leur forme pure ou sous forme d'un lot maître concentré.

7. Procédé pour la préparation d'un mélange selon au moins l'une quelconque des revendications 1 à 6, **caractérisé en ce qu'**on mélange les différents constituants du mélange les uns avec les autres.

8. Procédé pour la préparation d'un produit vulcanisé, **caractérisé en ce qu'**on utilise un mélange selon l'une quelconque des revendications 1 à 3 comme accélérateur de vulcanisation.

9. Procédé selon la revendication 8, **caractérisé en ce que** le mélange est utilisé comme accélérateur de vulcanisation pour le caoutchouc de chloroprène (CR), le caoutchouc de butyle (IIR), le caoutchouc de bromobutyle (BIIR), le caoutchouc de chlorobutyle (CIIR), le polymère d'épichlorhydrine (CO), un polymère de polyéthylène chlorosulfoné (CSM), le caoutchouc d'épichlorhydrine (CO), le caoutchouc d'oxyde d'éthylène-épichlorhydrine (ECO), le polymère de polyéthylène chloré (CM) et d'autres caoutchoucs ou leurs mélanges.

10. Procédé selon la revendication 8 ou 9, **caractérisé en ce que** les constituants du mélange selon l'une quelconque des revendications 1 à 3 sont ajoutés séparément ou ensemble sous forme pure ou sous forme de lots-maîtres concentrés séparés ou dans des combinaisons de la forme pure et d'un lot-maître concentré contenant plusieurs constituants au caoutchouc à vulcaniser, puis sont vulcanisés.

11. Procédé selon la revendication 10, **caractérisé en ce que** l'addition des différents composants dans le cas de l'addition séparée est réalisée de manière telle qu'un effet simultané d'accélération de la vulcanisation des différents composants est garanti pendant la vulcanisation.

12. Produit vulcanisé, pouvant être obtenu selon un procédé selon l'une quelconque des revendications 7 à 11.

13. Lot-maître, contenant du chlorure d'étain (II) dihydraté lié à du caoutchouc de butyle avec une concentration de chlorure d'étain (II) de 20-95% en poids.

14. Procédé pour la préparation de chlorure d'étain (II) dihydraté lié à du caoutchouc de butyle selon la revendication 13, **caractérisé en ce que** le chlorure d'étain (II) dihydraté est mélangé avec un copolymère d'isobutylène-isoprène insaturé.

15. Utilisation de chlorure d'étain (II) dihydraté lié à du caoutchouc de butyle selon la revendication 13 comme accélérateur de vulcanisation.
